# EUROPÄISCHE PATENTSCHRIFT

(11) **EP 3 900 004 B1**
(45) Veröffentlichungstag und Bekanntmachung des Hinweises auf die Patenterteilung: **14.06.2023**
(21) Anmeldenummer: 19813736.6
(22) Anmeldetag: 21.11.2019
(51) Int. Cl.: H01H 85/20, H01H 85/25

(54) **HOCHVOLTVERTEILSYSTEM**
HIGH-VOLTAGE DISTRIBUTION SYSTEM
SYSTÈME DE DISTRIBUTION HAUTE TENSION

(30) Priorität: 19.12.2018 DE 102018132988
(43) Veröffentlichungstag der Anmeldung: 27.10.2021
(73) Patentinhaber: Eugen Forschner GmbH, 78549 Spaichingen (DE)
(72) Erfinder: BORST, Peter, 78549 Spaichingen (DE)
(74) Vertreter: Keller Schneider Patentanwaltsgesellschaft mbH
(86) Internationale Anmeldenummer: PCT/EP2019/082034
(87) Internationale Veröffentlichungsnummer: WO 2020/126280

(56) Entgegenhaltungen:
- EP-A2- 2 112 675
- US-A1- 2012 019 344
- US-B1- 9 325 122

## Beschreibung

Die Erfindung betrifft ein Hochvoltverteilsystem umfassend ein Trägerelement mit einer Mehrzahl von an dem Trägerelement anordenbaren Halterungsvorrichtungen und einer Mehrzahl von an den Halterungsvorrichtungen anordenbaren Sicherungselementen gemäß dem Oberbegriff des Patentanspruchs 1.

Ein gattungsgemäßes System ist aus EP 3 006 252 A2 bekannt. Hierbei ist eine Trägereinrichtung mit mehreren Halterungseinrichtungen für die Aufnahme von Hochvolt-Absicherungselementen beschrieben. Die Hochvolt-Absicherungselemente können dabei unterschiedliche Formen und Größen aufweisen. Die Halterungsvorrichtungen weisen hierfür in Richtung der Achse der Hochvolt-Absicherungselemente ein Rastermaß für eine Kontaktierung bei unterschiedlichen Längen der Hochvolt-Absicherungselemente auf. Der Nachteil hierbei besteht jedoch darin, dass kein modularer Aufbau der Halterungsvorrichtungen für unterschiedlich große Träereinrichtungen möglich ist. Ein Verteilsystem nach dem Oberbegriff des Anspruchs 1 wird in US-A-2012/019344 offenbart.

Aufgabe der Erfindung ist es, ein modulares Hochvoltverteilsystem zur Aufnahme mehrerer Sicherungselemente an einem Trägerelement zu schaffen.

Diese Aufgabe wird erfindungsgemäß durch ein Hochvoltverteilsystem mit den Merkmalen des Anspruchs 1 gelöst. Vorteilhafte Ausgestaltungen der Erfindung sind in den Unteransprüchen angegeben.

Ein bevorzugtes Einsatzgebiet der Erfindung sind Anwendungen im Automobilbereich, insbesondere Anwendungen in der Elektromobilität.

Mit der vorliegenden Erfindung ist es möglich, modulare Hochvoltverteilsysteme mit einem Trägerelement für eine variabel Anzahl von Sicherungselementen, welche zudem auch in ihrer Form und Größe unterschiedlich ausgebildet sein können, zu schaffen.

Das erfindunsemäße Hochvoltverteilsstem umfasst ein Träerelement nach Anspruch 1.

In einer vorteilhaften Ausführungsform der Erfindung sind die Sicherungselemente und die Leiteranordnungen zwischen dem Oberteil und dem Unterteil angeordnet. Zudem ist am Oberteil ein Berührschutz für die wenigstens eine Leiteranordnungen ausgebildet. Dies trägt maßgeblich zu einer sicheren Handhabung des Hochvoltverteilsystems bei, da auch bei Öffnung eines Deckels des Trägerelements aufgrund des als flächige Abdeckung ausgebildeten Berührschutzes noch keine Berührung der mit hohen elektrischen Spannungen beaufschlagten Leiteranordnungen möglich ist.

Sowohl das Oberteil, als auch das Unterteil jeder Halterungsvorrichtung weist in einer vorteilhaften Weiterbildung des erfindungsgemäßen Hochvoltverteilsystems Rastmittel für eine gegenseitige formschlüssige mechanische Verrastung miteinander auf. Dadurch ist eine weitestgehend werkzeuglose, einfache und zuverlässige Montage des Systems gewährleistet.

Gemäß einer vorteilhaften Weiterbildung der Erfindung sind am Oberteil der Halterungsvorrichtung eine Vielzahl von Lüftungsbohrungen ausgebildet, von denen besonders bevorzugt wenigstens eine der Lüftungsbohrungen auch als Messpunkt für die Durchführung einer Messspitze eines elektrischen Messgeräts dient. Die Lüftungsbohrungen dienen zur Belüftung des Systems, ermöglichen eine gute Wärmeabfuhr von den Sicherungselementen und den Leiteranordnungen und verhindern so ein Überhitzen des Hochvoltverteilsystems.

Gemäß einer weiteren vorteilhaften Ausgestaltung der Erfindung weisen die einem Sicherungselement zugeordneten ersten und zweiten Teilelemente des Unterteils Rastelemente für eine gegenseitige formschlüssige Verrastung auf. So lassen sich die Unterteile ebenfalls ohne Einsatz von Werkzeugen modular zusammenbauen.

Die Oberteile der Halterungsvorrichtungen weisen in der Erfindung Aussparungen für die Leiteranordnungen auf, welche an die Position der jeweiligen Leiteranordnung anpassbar sind. So unterscheiden sich die Oberteile für eine mit einer Plus-Stromschiene verbindbare Leiteranordnung von den Oberteilen für eine mit der Minus-Stromschiene verbindbare Leiteranordnung, so dass ein Anbringen falscher, versehentliches vertauschter Oberteil-Teilelemente gemäß dem Poka-Yoke-Prinzip vermieden wird. Vorteilhafterweise ist in einer weiterhin bevorzugten Ausführungsform an einer Seite jedes Unterteils der Halterungsvorrichtung quer zur Längsachse des Sicherungselements wenigstens eine Vertiefung zur Aufnahme einer Stromschiene ausgebildet. Die Vertiefungen können wahlweise für die Minus- oder Plus-Schiene ausgebildet sein. In einer besonders vorteilhaften Ausführungsform können auch zwei getrennt voneinander angeordnete Vertiefungen für beide Stromschienen ausgebildet sein, die dann bevorzugt terrassenförmig auf einer unterschiedlichen Höhe angeordnet sind.

Erfindungsgemäß ist zudem vorgesehen, dass in der Halterungsvorrichtung Sicherungselemente unterschiedlicher Größe (Länge und/oder Durchmesser) und/oder Stärke (bezüglich ihrer Strombelastbarkeit in Ampere) anordenbar sind. So ist die Breite der Halterungsvorrichtungen derart ausgelegt, dass im erfindungsgemäßen Hochvoltverteilsystem Sicherungselemente zwischen etwa 50 Ampere bis zu 300 Ampere oder mehr anordenbar sind.

In einer vorteilhaften Weiterbildung ist das Oberteil der Halterungsvorrichtung zur Mitte hin nach unten hin abgekröpft ausgebildet. Dadurch ist bei Bedarf der so entstehende freie Raum in der Mitte des Trägerelements zur Anordnung weiterer, beispielsweise an einem Deckel befestigbarer Komponenten nutzbar.

Das Trägerelement des Hochvoltverteilsystems wird bevorzugt von einem Gehäuse gebildet, welches zumindest an einer Seite Öffnungen zum Kontaktieren mit den Leiteranordnungen aufweist. In einer alternativen Ausführungsform weist das Gehäuse an zwei gegenüberliegenden Seiten Öffnungen auf, so dass eine als Eingangsseite bezeichnete erste Seite vom Erzeuger kommend in das Hochvoltverteilsystem hineinführt und eine als Ausgangsseite bezeichnete zweite Seite zum Verbraucher hinführt. In den gezeigten Ausführungsbeispielen erfolgt die Kontaktierung nur auf einer Seite des Gehäuses.

An seiner Oberseite weist das Gehäuse wenigsten eine Dichtung für ein Zusammenwirken mit einer Dichtfläche oder Dichtkante eines am Gehäuse anbringbaren Deckels auf. Die Dichtung kann dabei beispielsweise in Form einer Dichtraupe ausgebildet sein.

Die nicht benötigten Öffnungen sind bei Nichtgebrauch einer bestimmten Anzahl von Kontakten mittels Verschluss-Stopfen und/oder Verschlussschrauben abdichtbar verschließbar. So lässt sich das Trägerelement des Hochvoltverteilsystems auch bei einer nur teilweisen Belegung der Halterungsvorrichtungen hinreichend abdichten.

Nachfolgend wird ein Ausführungsbeispiel der Erfindung unter Bezugnahme auf die Zeichnungen näher erläutert. Es zeigt:
- Fig. 1: eine erste perspektivische Ansicht des Hochvoltverteilsystems mit Trägerelement;
- Fig. 2: eine zweite perspektivische Ansicht des Hochvoltverteilsystems mit Trägerelement;
- Fig. 3: eine Schnittdarstellung durch das Hochvoltverteilsystem quer zur Längsachse der Sicherungselemente;
- Fig. 4: eine Schnittdarstellung durch das Hochvoltverteilsystem parallel zur Längsachse der Sicherungselemente;
- Fig. 5: eine perspektivische Ansicht des Hochvoltverteilsystems ohne das Trägerelement;
- Fig. 6: eine Draufsicht auf des Hochvoltverteilsystem mit darin angeordneten Sicherungselementen unterschiedlicher Größe ohne die Oberteile der Halterungsvorrichtungen;
- Fig. 7: eine perspektivische Darstellung eines einzelnen Unterteils der Halterungsvorrichtung mit einem darauf angeordneten Sicherungselement;
- Fig. 8: eine perspektivische Darstellung eines einzelnen Oberteils der Halterungsvorrichtung;
- Fig. 9: eine Ansicht auf mehrere nebeneinander angeordnete Halterungsvorrichtungen von unten und
- Fig. 10: eine Draufsicht auf ein leeres Unterteil ohne ein darauf angeordnetes Sicherungselement .

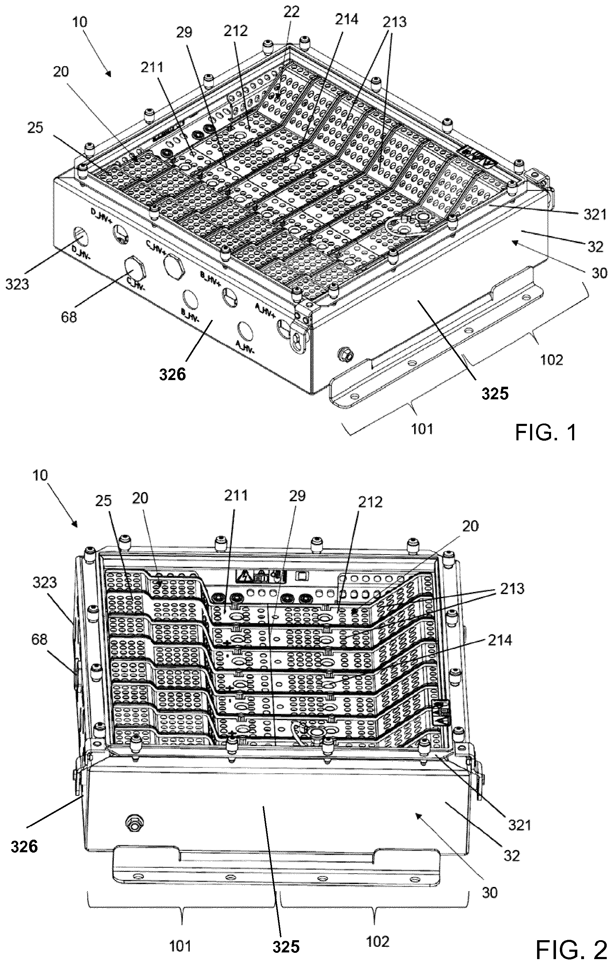

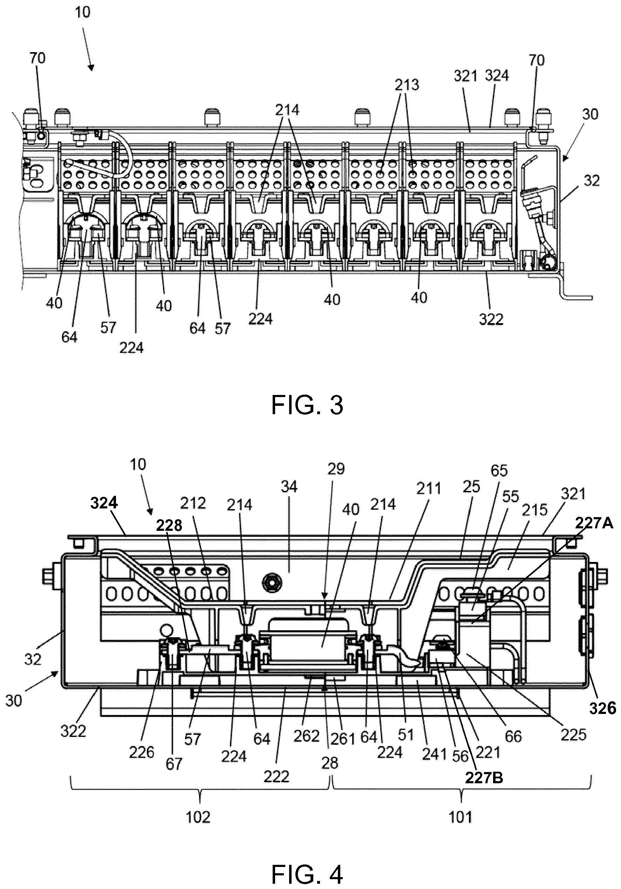

Die Figur 1 zeigt ein Hochvoltverteilsystem 10 umfassend ein Trägerelement 30 mit einer Mehrzahl von an diesem Trägerelement 30 angeordneten Halterungsvorrichtungen 20. In jeder Halterungsvorrichtung 20 ist ein Sicherungselement 40 mit einer am Sicherungselement 40 angeordneten Leiteranordnung 50 vorgesehen (siehe Figuren 4 bis 7), wobei in der Praxis auch nicht mit Sicherungselementen 40 bestückte Halterungsvorrichtungen 20 vorkommen können.

Das Trägerelement 30 wird dabei von einem rechteckigen Gehäuse 32 mit einer Bodenplatte 322 (siehe Figuren 3 und 4), Seitenwänden 325, einer Vorderwand 326 und einer die Seitenwände 325 und die Vorderwand 326 nach oben abschließenden Oberseite 321 gebildet.

An der Vorderwand 326 des Gehäuses 32 sind mehrere Öffnungen 323 ausgebildet. Zwei der Öffnungen 323 sind im gezeigten Ausführungsbeispiel mit Verschluss-Schrauben 68 verschlossen. In weiteren Ausführungsbeispielen können auch mehrere oder auch keine der Öffnungen 323 verschlossen sein, falls diese im konkreten Anwendungsfall nicht für eine Kontaktierung mit einem Sicherungselement 40 benötigt werden. In einer alternativen Ausführung können anstelle der Verschlussschrauben 68 auch Verschluss-Stopfen 68 vorgesehen sein.

Die Halterungsvorrichtungen 20 weisen jeweils ein Oberteil 21 und ein Unterteil 22 auf. Das Oberteil 21 setzt sich aus einem ersten Teilelement 211 und einem zweiten Teilelement 212 zusammen, die durch eine Trennfuge 29 getrennt sind. Das Unterteil 22 setzt sich aus einem ersten Teilelement 221 und einem zweiten Teilelement 222 zusammen, die durch eine Trennfuge 28 getrennt sind (siehe Figuren 4 bis 7 und 9).

Das Oberteil 21 ist dabei als sog. Berührschutz 25 ausgebildet. Dies bedeutet, dass ein versehentliches Berühren, beispielsweise im Falle einer Wartung oder Reparatur der zwischen dem Oberteil 21 und dem Unterteil 22 angeordneten Sicherungselemente 40 und der an diesen Sicherungselementen 40 angeordneten Leiteranordnungen 50 (siehe Figuren 4 bis 7 ) ohne ein Entfernen des jeweiligen Oberteils 21 oder zumindest des ersten Teilelements 211 nicht möglich ist.

Die in der Darstellung mittig verlaufende Trennfuge 29 trennt das erste Teilelement 211 vom zweiten Teilelement 212 des Oberteils 21. An beiden Teilelementen 211 und 212 sind eine Vielzahl an Lüftungsbohrungen 213 ausgebildet, wovon bevorzugt wenigstens eine der Lüftungsbohrungen 213 als Messpunkt 214 dient. Die Messpunkte 214 sind dabei in Form einer Tulpenförmigen Vertiefung zur Führung einer Messspitze eines elektrischen Messwerkzeugs ausgebildet (siehe Figuren 3 bis 5).

In Figur 2 ist das Hochvoltverteilsystem aus einer anderen Perspektive dargestellt. Dabei sind Markierungen mit + (plus) und - (minus) an den ersten Teilelementen 211 des Oberteils 21 zu erkennen. Um einen größtmöglichen Schutz vor Verwechslung zu gewährleisten, sind die Teilelemente 211 je nach Zugehörigkeit zu einem Plus- oder Minuspol der Anordnung unterschiedlich eingefärbt, beispielsweise in rot oder blau. In alternativen Ausgestaltungen ist jedoch auch eine einfarbige Ausgestaltung möglich.

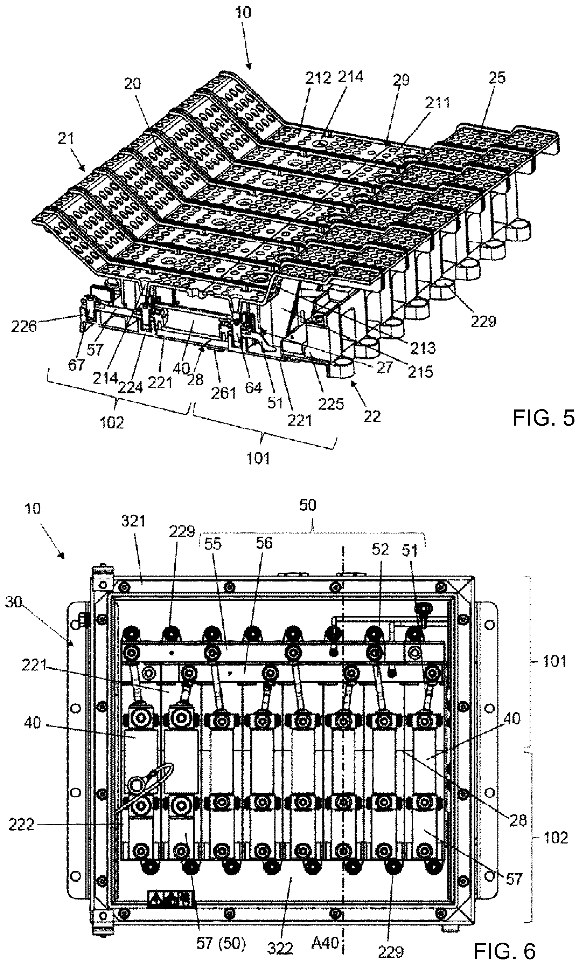

Die Figur 3 zeigt eine Schnittdarstellung durch das Hochvoltverteilsystem 10 quer zur Längsachse A40 (siehe Figur 6) der Sicherungselemente 40. Im gezeigten Ausführungsbeispiel sind Sicherungselemente 40 in unterschiedlichen Größen im Hochvoltverteilsystem 10 angeordnet. Auf der linken Seite der Darstellung sind in den Halterungsvorrichtungen 20 stärkere Sicherungselemente 40 mit einem grö-ßeren Durchmesser angeordnet, als in den übrigen Halterungsvorrichtungen 20. Das Hochvoltverteilsystem 10 ist insbesondere für Sicherungselemente 40 im Größenbereich zwischen etwa 50 Ampere und etwa 300 Ampere vorgesehen, wie sie beispielsweise bei Elektrofahrzeugen Verwendung finden.

Die Schnittachse in Figur 3 verläuft durch ein Befestigungselement 64, welches an einem am Unterteil 22 vorgesehenen ersten Sockel 224 angeordnet ist und dort ein zweites Ende 42 des Sicherungselements 40 mit einem zu einer (Minus-) Stromschiene 56 führenden ersten Leiterabschnitt 51 verbindet (siehe auch Figur 4).

Das Trägerelement 30 ist in den Figuren 3 und 4 geschlossen gezeigt. Dabei liegt ein Deckel 324 auf der Oberseite 321 des Gehäuses 32 auf und eine Dichtung 70, beispielsweise in Form einer auf einem Steg oder in einer Nut an der Oberseite 321 platzierten Dichtraupe, dichtet das Trägerelement 30 beispielsweise gegenüber Feuchtigkeit oder Staub aus der Umgebungsluft ab.

Die in der Figur 4 dargestellte, durch die Längsachse A40 eines Sicherungselements 40 verlaufende Schnittdarstellung verdeutlicht ebenfalls aus einer anderen Perspektive die Anordnung des gesamten, mittels des Deckels 324 geschlossenen Hochvoltverteilsystems 10.

Auf einer Eingangsseite 101 ist am ersten Teilelement 221 des Unterteils 22 ein Sockel 225 ausgebildet, welcher zweistufig ausgebildet ist. An der weiter außen liegenden höheren Stufe ist eine Vertiefung 227A für die Aufnahme einer Plus-Stromschiene 55 ausgebildet. An der weiter innen liegenden niedrigen Stufe ist eine Vertiefung 227B für die Aufnahme einer Minus-Stromschiene 56 vorgesehen. Dabei ist die Stromschiene 55 mittels eines Befestigungselements 65 und die Stromschiene 56 mittels eines Befestigungselements 66 am Sockel 225 befestigbar.

Ein erster Leiterabschnitt 51 der Leiteranordnung 50 verbindet die Stromschiene 56 mit einem ersten Ende 41 des Sicherungselements 40. Ein zweites Ende 42 des Sicherungselements 40 ist mit einer Stromschiene 57 verbunden, welche auf einer Ausgangsseite 102 des Hochvoltverteilsystems 10 angeordnet ist. Die Stromschiene 57 bzw. der ausgangsseitige Leiterabschnitt 57 wird dabei in einer Vertiefung 228 an einem Sockel 226 geführt, an welchem sie mittels eines Befestigungselements 67 befestigbar ist. Die Befestigung des Sicherungselements 40 am Unterteil 22 erfolgt dabei mittels zweier Befestigungselemente 64. Das erste Ende 41 wird dabei über einen ersten Sockel 224 am ersten Teilelement 221 und das zweite Ende 42 über den zweiten Sockel 224 am zweiten Teilelement 222 befestigt.

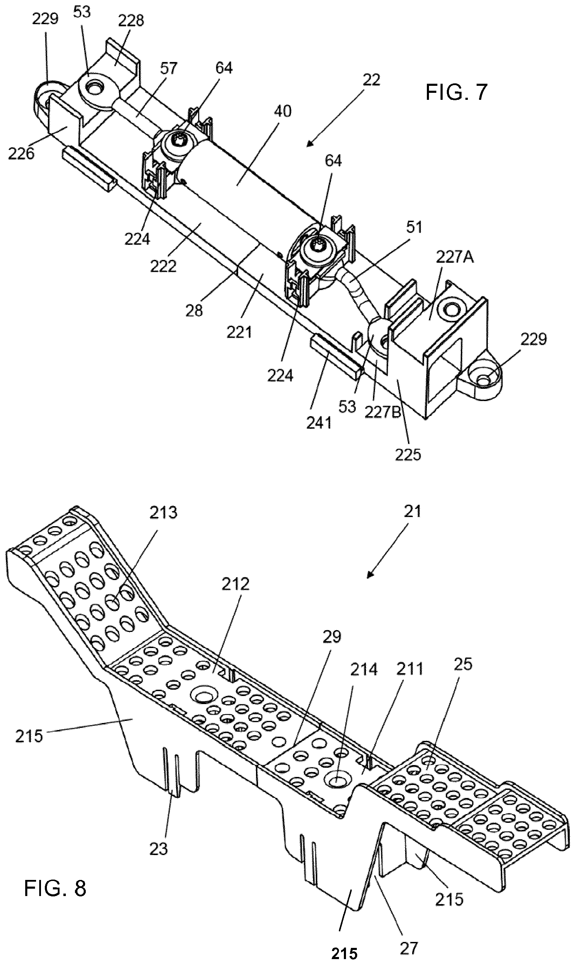

Eine gegenseitige formschlüssige Verrastung der beiden Teilelemente 221 und 222 erfolgt zudem mittels eines Rastelements 261 am ersten Teilelement 221 sowie eines zweiten Rastelements 262 am zweiten Teilelement 222, zwischen denen die Trennfuge 28 gebildet wird (siehe Fig. 8).

Das Oberteil 21 mit seinen Teilelementen 211 und 212 ist so über dem Unterteil 22 angeordnet, dass die Messpunkte 214 direkt über den Befestigungsmitteln 64 des ersten und zweiten Endes 41 und 42 des Sicherungselements 40 liegen. Der Messpunkt 214 kann somit als Anschlussterminal beispielsweise für einen Duspol^{®}-Spannungsprüfer angesehen werden, wodurch als Messfunktionalität beispielsweise die Spannungsprüfung zwischen Plus- und Minuspol oder eine Durchgangsmessung des Sicherungselements 40 zwischen Plus bzw. Minus und der Stromschiene 57 durchführbar ist.

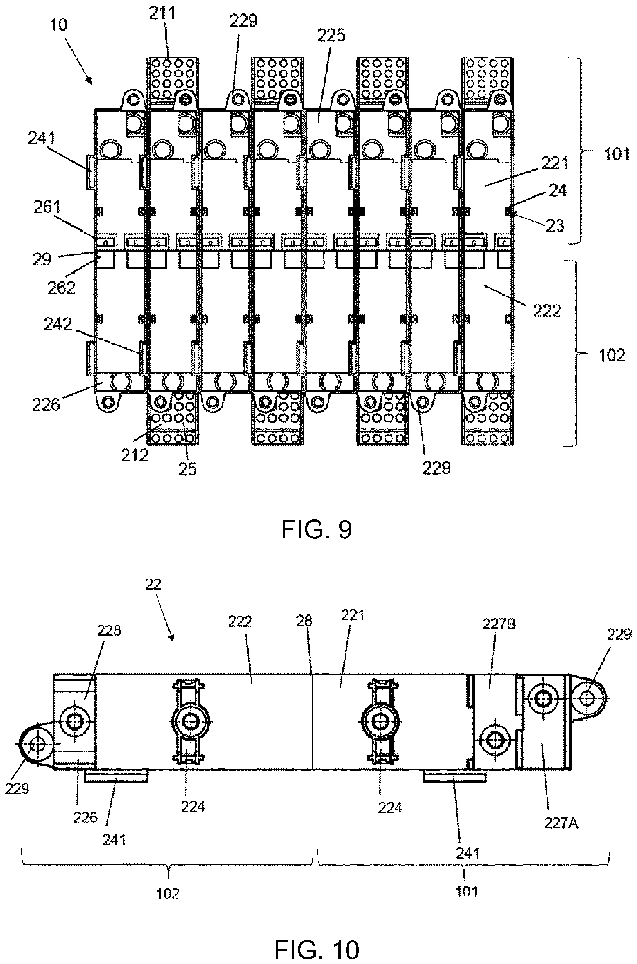

Der Abstand zwischen Oberteil 21 und Unterteil 22 wird durch beidseitige seitlich nach unten vorspringende Verlängerungen 215 am Oberteil 21 dargestellt. An den Verlängerungen 215 der beiden Teilelemente 211 und 212 sind Rastmittel 23 - beispielsweise in Form eines Rasthakens - ausgebildet. Diese Rasthaken 23 greifen in Rastmittel 24 - beispielsweise in Form einer Rastnut - im Unterteil 22 ein und verbinden diese somit formschlüssig mechanisch miteinander (siehe Figuren 8 und 9).

In der in Figur 4 gezeigten Schnittdarstellung des Hochvoltverteilsystems 10 ist zwischen dem Oberteil 21 und der Oberseite 321 des Gehäuses 32 ein durch die Abkröpfung der Teilelemente 211 bzw. 212 auf deren Innenseite nach unten gebildete Hohlraum 34 dargestellt. Dieser kann bei Bedarf für weitere Komponenten verwendet werden, wodurch der zur Verfügung stehende Bauraum besser nutzbar ist.

Die perspektivische Schnittdarstellung in den Figuren 5 und 8 zeigt im rechten Bildabschnitt zusätzlich einen Ausschnitt einer Aussparung 27, welche in einer Verbindungswand zwischen den beiden Verlängerungen 215 des Oberteils 21 ausgebildet ist. Diese Aussparung 27 dient dazu, jedes Halterungselement 20 an die jeweilige Leiteranordnung 50 anzupassen, die entweder als Plus-Leiterabschnitt 52 oder als Minus-Leiterabschnitt 51 in unterschiedlichem Schrägverlauf und in unterschiedlicher Länge ausgebildet ist (siehe Fig. 6). Hierdurch werden Fehler vermieden und die Verwechslungsgefahr durch das sogenannte Poka-Yoke-Prinzip beseitigt. Zudem ist die Form der beiden Teilelemente 211 und 212 unterschiedlich. Wobei am Teilelement 211, welches sich auf einer Eingangsseite 101 des Hochvoltverteilsystems befindet, zwei Stufen ausgebildet sind und am Teilelement 212, welches sich auf einer Ausgangsseite 102 befindet eine Schräge ausgebildet ist. Dies bietet zusätzlich den Vorteil, dass auch die Teilelemente 211 und 212 bei der Montage nicht vertauscht werden können.

Zur Befestigung der Halterungsvorrichtungen 20 an der Bodenplatte 322 des Trägerelements 30 sind an jeder Seite der Halterungsvorrichtung 20 Buchsen 229 ausgebildet. So sind diese beispielsweise an der Bodenplatte 322 des Gehäuses 32 anschraubbar.

In Figur 6 ist eine Draufsicht der in der Figur 3 gezeigten Schnittdarstellung des Hochvoltverteilsystems 10 gezeigt. Dabei ist die modulare Anordnung des Hochvoltsystems gut zu erkennen. Im rechten Bildbereich ist die Anordnung der Leiteranordnung 50 mit ihrem mit der Stromschiene 56 (Minus) verbundenen ersten Leiterabschnitt 51 und einem mit der Stromschiene 55 (Plus) verbundenen zweiten Leiterabschnitt 52 dargestellt.

Im in der Figur 7 gezeigten Unterteil 22 in perspektivischer Darstellung ist die Stromschiene 57 alternativ als Runddraht ausgebildet. Sowohl der erste Leiterabschnitt 51, als auch der Runddraht der Stromschiene 57 sind endseitig mit einem Ringkabelschuh 53 zur Kontaktierung mit einer benachbarten Stromschiene oder einem benachbarten Leiter versehen.

An jedem Unterteil 22 sind Rastmittel 241 ausgebildet. Diese greifen in Rastvertiefungen 242 (siehe Figur 9). Durch diese Rastverbindung zwischen Rastmittel 241 und Rastvertiefung 242 sind die Unterteile 22 der Halterungsvorrichtungen 20 in beliebiger Zahl modular miteinander verbindbar und dadurch an Trägerelemente 30 unterschiedlicher Größe anpassbar.

In der Figur 8 ist das Oberteil 21 einzeln dargestellt. Die seitlichen Verlängerungen 215 mit den Rastmitteln 23 sowie die Aussparung 27 sind dort gut zu erkennen.

Figur 9 zeigt eine Draufsicht auf mehrere nebeneinander angeordnete Halterungsvorrichtungen 20 mit der Anordnung der Rastmittel 241 bzw. 242 zwischen den Unterteilen 21, der Anordnung der Rastelemente 216 bzw. 262 zwischen dem ersten und zweiten Teilelement 221 und 222, sowie den Rastmitteln 23 bzw. 24 zwischen Oberteil 23 und Unterteil 22.

In der Figur 10 ist eine Draufsicht auf ein Unterteil 22 gezeigt. Besonders gut erkennbar sind hier die Sockel 224 zur Aufnahme des hier nicht dargestellten Sicherungselements 40. Die Sockel 224 sind dabei nicht spiegelbildlich im Unterteil 22 angeordnet. Dies ist ein weiterer Sicherheitsaspekt, da die Sicherungselemente 40 hierdurch nur in einer Richtung auf dem Unterteil 22 befestigbar sind.

Allgemein gilt, dass die beiden Teilelemente 221 bzw. 222 als sogenannte Einleger ausgebildet und im gezeigten Ausführungsbeispiel aus Kunststoff gebildet sind. Alternativ können diese auch aus jedem anderen elektrisch isolierenden Material, wie beispielsweise Keramik, gebildet sein. Das Trägerelement 30 ist vorzugsweise aus einem korrosionsbeständigen Material, wie beispielsweise Edelstahl, gebildet.

### Bezugszeichenliste

- 10: Hochvoltverteilsystem
- 101: Eingangsseite
- 102: Ausgangsseite

- 20: Halterungsvorrichtung
- 21: Oberteil
- 211: (erstes) Teilelement (von 21)
- 212: (zweites) Teilelement (von 21)
- 213: Lüftungsbohrung
- 214: Messpunkt
- 215: (seitliche) Verlängerung (an 21)
- 22: Unterteil
- 221: (erstes) Teilelement (von 22)
- 222: (zweites) Teilelement (von 22)
- 224: Sockel (für 40)
- 225: Sockel (eingangsseitig)
- 226: Sockel (ausgangsseitig)
- 227A: Vertiefung (an 225 für 55))
- 227B: Vertiefung (an 225 für 56)
- 228: Vertiefung (an 226 für 57)
- 229: Bund
- 23: Rastmittel (an 21)
- 24: Rastmittel (an 22)
- 241: Rastnase (an 22)
- 242: Rastvertiefung (an 22 für 241)
- 25: Berührschutz
- 261: Rastelement (an 221)
- 262: Rastelement (an 222)
- 27: Aussparung (für 50)
- 28: Trennfuge (von 22)
- 29: Trennfuge (von 21)
- 30: Trägerelement
- 32: Gehäuse
- 321: Oberseite
- 322: Bodenplatte
- 323: Öffnung
- 324: Deckel
- 325: (Seiten-)Wand (von 32)
- 326: (Vorder-)Wand (von 32)
- 34: Hohlraum

- 40: Sicherungselement
- 41: (erstes) Ende (eingangsseitig)
- 42: (zweites) Ende (ausgangsseitig)

- 50: Leiteranordnung
- 51: (erster) Leiterabschnitt (Minus) (von 50 an 55)
- 52: (zweiter) Leiterabschnitt (Plus) (von 50 an 56)
- 53: Ringkabelschuh
- 55: Stromschiene (Plus)
- 56: Stromschiene (Minus)
- 57: Stromschiene (oder Leiterabschnitt, ausgangsseitig)

- 64: Befestigungselement (für 40 an 224)
- 65: Befestigungselement (für 55 an 227A)
- 66: Befestigungselement (für 56 an 227B)
- 67: Befestigungselement (für 57 an 228)
- 68: Verschluss-Stopfen/Verschluss-Schraube

- 70: Dichtung

- A40: Längsachse (von 40)

## Patentansprüche

1. Hochvoltverteilsystem (10) umfassend ein Trägerelement (30) mit einer Mehrzahl von an dem Trägerelement (30) anordenbaren Halterungsvorrichtungen (20) und einer Mehrzahl von an den Halterungsvorrichtungen (20) anordenbaren Sicherungselementen (40), mit wenigstens einer an jedem Sicherungselement (40) angeordneten Leiteranordnung (50), wobei die Halterungsvorrichtungen (20) jeweils ein Oberteil (21) und ein Unterteil (22) aufweisen, die in einer Richtung einer Längsachse (A40) der Sicherungselemente (40) zumindest in ein erstes Teilelement (211; 221) und ein zweites Teilelement (212; 222) teilbar ausgebildet sind,
**dadurch gekennzeichnet, dass** die Oberteile (21) der Halterungsvorrichtungen (20) Aussparungen (27) für die Leiteranordnungen (50) aufweisen, die an die jeweilige Position der Leiteranordnung (50) derart angepasst sind, dass sich die Oberteile (21) für eine mit einer Plus-Stromschiene verbindbare Leiteranordnung (50) von den Oberteilen (21) für eine mit einer Minus-Stromschiene verbindbaren Leiteranordnung (50) unterscheiden.

2. Hochvoltverteilsystem (10) nach Anspruch 1, **dadurch gekennzeichnet, dass** die Sicherungselemente (40) und die Leiteranordnungen (50) zwischen dem Oberteil (21) und dem Unterteil (22) angeordnet sind und dass am Oberteil (21) ein Berührschutz (25) für die wenigstens eine Leiteranordnung (50) ausgebildet ist.

3. Hochvoltverteilsystem (10) nach Anspruch 1 oder 2, **dadurch gekennzeichnet, dass** das Oberteil (21) und das Unterteil (22) jeder Halterungsvorrichtung (20) Rastmittel (23; 24) für eine mechanische Verrastung miteinander aufweisen.

4. Hochvoltverteilsystem (10) nach einem der vorhergehenden Ansprüche, **dadurch gekennzeichnet, dass** das Oberteil (21) der Halterungsvorrichtung (20) eine Vielzahl von Lüftungsbohrungen (213) aufweist.

5. Hochvoltverteilsystem (10) nach Anspruch 4, **dadurch gekennzeichnet, dass** wenigstens eine Lüftungsbohrung (213) auch als Messpunkt (214) ausgebildet ist.

6. Hochvoltverteilsystem (10) nach einem der vorhergehenden Ansprüche, **dadurch gekennzeichnet, dass** die einem Sicherungselement (40) zugeordneten ersten und zweiten Teilelemente (221; 222) des Unterteils (22) Rastelemente (261; 262) für eine gegenseitige Verrastung aufweisen.

7. Hochvoltverteilsystem (10) nach einem der vorhergehenden Ansprüche, **dadurch gekennzeichnet, dass** an einer Seite des Unterteils (22) der Halterungsvorrichtung (20) quer zur Längsachse (A40) des Sicherungselements (40) wenigstens eine Vertiefung (227A, 227B; 228) zur Aufnahme wenigstens einer Stromschiene (55; 56; 57) ausgebildet ist.

8. Hochvoltverteilsystem (10) nach einem der vorhergehenden Ansprüche, **dadurch gekennzeichnet, dass** in der Halterungsvorrichtung (20) Sicherungselemente (40) unterschiedlicher Größe und/oder unterschiedlicher Stärke anordenbar sind.

9. Hochvoltverteilsystem (10) nach einem der vorhergehenden Ansprüche, **dadurch gekennzeichnet, dass** das Oberteil (21) der Halterungsvorrichtung (20) nach innen hin nach unten abgekröpft ausgebildet ist.

10. Hochvoltverteilsystem (10) nach einem der vorhergehenden Ansprüche **dadurch gekennzeichnet, dass** das Trägerelement (30) von einem Gehäuse (32) gebildet ist, an dem zumindest in einer Wand (325; 326) Öffnungen (323) zum Kontaktieren mit den Leiteranordnungen (50) ausgebildet sind.

11. Hochvoltverteilsystem (10) nach Anspruch 10, **dadurch gekennzeichnet, dass** die Öffnungen (323) am Gehäuse (32) mittels Verschluss-Stopfen und/oder Verschlussschrauben (68) abdichtbar verschließbar sind.

12. Hochvoltverteilsystem (10) nach Anspruch 10 oder 11, **dadurch gekennzeichnet, dass** das Gehäuse (32) an einer Oberseite (321) wenigstens eine Dichtung (70) für ein Zusammenwirken mit einem am Gehäuse (32) anbringbaren Deckel (324) aufweist.

## Claims

1. High voltage distribution system (10) comprising a support element (30) with a plurality of retaining devices (20) which can be arranged on the support element (30) and a plurality of fuse elements (40) which can be arranged on the retaining devices (20), with at least one conductor assembly (50) arranged on each fuse element (40), the retaining devices (20) each having an upper part (21) and a lower part (22) which, in a direction of a longitudinal axis (A40) of the fuse elements (40), are configured such that they can be divided at least into a first subelement (211; 221) and a second subelement (212; 222),
**characterized in that** the upper parts (21) of the retaining devices (20) have recesses (27) for the conductor assemblies (50) which are adapted to the respective position of the conductor assembly (50) such that the upper parts (21) for a conductor assembly (50) which can be connected to a positive busbar differ from the upper parts (21) for a conductor assembly (50) which can be connected to a negative busbar.

2. The high voltage distribution system (10) according to claim 1, **characterized in that** the fuse elements (40) and the conductor assemblies (50) are arranged between the upper part (21) and the lower part (22), and **in that** a contact protection (25) for the at least one conductor assembly (50) is formed on the upper part (21).

3. The high voltage distribution system (10) according to claim 1 or 2, **characterized in that** the upper part (21) and the lower part (22) of each retaining device (20) have latching means (23; 24) for mechanical latching to one another.

4. The high voltage distribution system (10) according to one of the preceding claims, **characterized in that** the upper part (21) of the retaining device (20) has a plurality of ventilation holes (213).

5. The high voltage distribution system (10) according to claim 4, **characterized in that** at least one ventilation hole (213) is also configured as a measuring point (214).

6. The high voltage distribution system (10) according to one of the preceding claims, **characterized in that** the first and second subelements (221; 222), which are assigned to a fuse element (40), of the lower part (22) have latching elements (261; 262) for mutual latching.

7. The high voltage distribution system (10) according to one of the preceding claims, **characterized in that** at least one recess (227A, 227B; 228) for receiving at least one busbar (55; 56; 57) is formed on one side of the lower part (22) of the retaining device (20) transversely to the longitudinal axis (A40) of the fuse element (40).

8. The high voltage distribution system (10) according to one of the preceding claims, **characterized in that** fuse elements (40) of different size and/or different thickness can be arranged in the retaining device (20).

9. The high voltage distribution system (10) according to one of the preceding claims, **characterized in that** the upper part (21) of the retaining device (20) is bent downwards towards the inside.

10. The high voltage distribution system (10) according to one of the preceding claims, **characterized in that** the support element (30) is formed by a housing (32) on which openings (323) for contacting the conductor assemblies (50) are formed at least in one wall (325; 326).

11. The high-voltage distribution system (10) according to claim 10, **characterized in that** the openings (323) on the housing (32) can be closed in a sealable manner by means of sealing plugs and/or screw plugs (68).

12. The high-voltage distribution system (10) according to claim 10 or 11, **characterized in that** the housing (32) has at least one seal (70) on an upper side (321) for interaction with a cover (324) which can be attached to the housing (32).

## Revendications

1. Système de distribution haute tension (10) comprenant un élément de support (30) avec une pluralité de dispositifs de fixation (20) configurés de manière à pouvoir être disposés sur l'élément de support (30) et une pluralité d'éléments fusibles (40) configurés de manière à pouvoir être disposés sur les dispositifs de fixation (20), avec au moins un agencement de conducteurs (50) disposé sur chaque élément fusible (40), les dispositifs de fixation (20) présentant chacun une partie supérieure (21) et une partie inférieure (22) qui, dans une direction d'un axe longitudinal (A40) des éléments fusibles (40), sont divisées au moins en un premier élément partiel (211 ; 221) et un deuxième élément partiel (212 ; 222), **caractérisé en ce que** les parties supérieures (21) des dispositifs de fixation (20) présentent des évidements (27) pour les agencements de conducteurs (50), qui sont adaptés à la position respective de l'agencement de conducteurs (50) de telle sorte que les parties supérieures (21) pour un agencement de conducteurs (50) configuré de manière à pouvoir être relié à un rail conducteur positif se différencient des parties supérieures (21) pour un agencement de conducteurs (50) configuré de manière à pouvoir être relié à un rail conducteur négatif.

2. Système de distribution haute tension (10) selon la revendication 1, **caractérisé en ce que** les éléments fusibles (40) et les agencements de conducteurs (50) sont disposés entre la partie supérieure (21) et la partie inférieure (22) et **en ce qu'**une protection anti-contact (25) est formée sur la partie supérieure (21) pour l'au moins un agencement de conducteurs (50).

3. Système de distribution haute tension (10) selon la revendication 1 ou 2, **caractérisé en ce que** la partie supérieure (21) et la partie inférieure (22) de chaque dispositif de fixation (20) présentent des moyens d'encliquetage (23 ; 24) pour un encliquetage mécanique entre elles.

4. Système de distribution haute tension (10) selon l'une des revendications précédentes, **caractérisé en ce que** la partie supérieure (21) du dispositif de fixation (20) comporte une pluralité de trous de ventilation (213).

5. Système de distribution haute tension (10) selon la revendication 4, **caractérisé en ce qu'au** moins un trou de ventilation (213) est également configuré comme point de mesure (214).

6. Système de distribution haute tension (10) selon l'une des revendications précédentes, **caractérisé en ce que** les premier et deuxième éléments partiels (221 ; 222) de la partie inférieure (22) associés à un élément fusible (40) présentent des éléments d'encliquetage (261 ; 262) pour un encliquetage mutuel.

7. Système de distribution haute tension (10) selon l'une des revendications précédentes, **caractérisé en ce que** sur un côté de la partie inférieure (22) du dispositif de fixation (20), transversalement à l'axe longitudinal (A40) de l'élément fusible (40), au moins un renfoncement (227A, 227B ; 228) est formé pour recevoir au moins une barre conductrice (55 ; 56 ; 57).

8. Système de distribution haute tension (10) selon l'une des revendications précédentes, **caractérisé en ce que** des éléments de fixation (40) de différentes tailles et/ou de différentes épaisseurs sont configurés de manière à pouvoir être disposés dans le dispositif de fixation (20).

9. Système de distribution haute tension (10) selon l'une des revendications précédentes, **caractérisé en ce que** la partie supérieure (21) du dispositif de fixation (20) est coudée vers le bas en direction de l'intérieur.

10. Système de distribution haute tension (10) selon l'une des revendications précédentes, **caractérisé en ce que** l'élément de support (30) est formé par un boîtier (32) sur lequel sont formées, au moins dans une paroi (325 ; 326), des ouvertures (323) pour la mise en contact avec les agencements de conducteurs (50).

11. Système de distribution haute tension (10) selon la revendication 10, **caractérisé en ce que** les ouvertures (323) sur le boîtier (32) peuvent être fermées de manière étanche au moyen de bouchons et/ou de vis de fermeture (68).

12. Système de distribution haute tension (10) selon la revendication 10 ou 11, **caractérisé en ce que** le boîtier (32) présente sur une face supérieure (321) au moins un joint d'étanchéité (70) pour une coopération avec un couvercle (324) pouvant être monté sur le boîtier (32).
